# EUROPEAN PATENT APPLICATION

(11) **EP 2 127 869 A2**
(43) Date of publication of application: **02.12.2009**
(21) Application number: 08015443.8
(22) Date of filing: 02.09.2008
(51) Int. Cl.: B32B 38/10, E06B 3/10, B29C 63/00

(54) **Manufacturing process for shaped wings and similar furniture component elements, and shaped wing and furniture component element thereby obtained**

(30) Priority: 30.05.2008 IT PN20080046
(71) Applicant: LA VENUS S.P.A., 33087 Pasiano (PN) (IT)
(72) Inventor: Giampietro, Diana, 33080 Prata di Pordenone (PN) (IT)
(74) Representative: Dalla Rosa, Adriano

(57) **Abstract**

Manufacturing process for shaped wings and similar furniture component elements, comprising the following manufacturing steps:
- the panels of wooden materials are shaped as a set of quadrangular rectilinear lengthened and continuous bars, each lengthened bar of which is then conveyed towards a cutting station, where each bar (15) is cut along its sides;
- said cut bar (15) intended to form a furniture wing (11) is displaced, in a single displacement direction, in correspondence of a smoothing station (17) to obtain a smooth planar finishing of the sides;
- the side edges of said bar (15) are adequately profiled for the entire extent thereof by profile means (19);
- the profiled side edges of said bar (15) are smoothed finished by smoothing means;
- said bar (15) is displaced towards a subsequent coating station, and on to all the external surface of the bar (15) it is applied and glued a surface covering (23), which is applied and glued contemporaneously also on to the side edges of the same bar;
- said bar (15) is displaced towards a further cutting station, where it is respectively cut at the extent able to obtain a set of wings (11), is squared for obtaining a wing, and in case is flanged and trimmed along the edge of the wing flat parts, by displacement of the same wing towards a further flanging and trimming station;
- the catching handle (12) of each wing (11) is trimmed.

## Description

The invention relates to a manufacturing process for shaped wings, particularly with a handle, and similar furniture component elements, and also relates to a shaped wing and similar furniture component element obtained thereby.

Furniture wings provided with handle are known, which are mounted on furniture of various kind and are displaceable from an opened to a closed position, and vice versa, with respect to the furniture body on to which they are mounted.

Furniture wings the handle of which is realized on the front part of the same wing are known, by shaping the wing in such a way as to provide for a hollowed zone in which the person fingers may be inserted, so as to allow the same wing to be displaced. At the present time, the production of this kind of shaped wings is effected by machining at first, for each wing to be obtained, the panel of wooden material devoted to form the wing with the same outer profile and the same size of the same wing, then by applying on to such panel at first the relative surface covering sheet, formed by the decorative material of the required type and with the required aesthetical appearance, and the surface covering sheet is applied by means of glueing and machining with conventional operative machines of per se known type, and then by applying the preformed handle thereon.

This production manner of the wings and the furniture component elements, however, requires to prepare in advance a set of panels of wooden material corresponding to the number of the wings, and the relative handles, to be made, then to shape each panel with the required form and size, and finally to apply on to such panel the relative covering material sheet, and also to assemble the handle, with consequent numerous working steps and long working times for each single wing.

The object of the present invention is to simplify and reduce the working steps needed for obtaining a wing and a furniture element, with respect to the present above described production technology, with consequent greater productive flexibility and capacity and less working steps and shorter working times needed for producing these furniture elements.

This object is obtained, according to the present invention, with a manufacturing process for wings and furniture elements and with a wing and a furniture element obtained with particular reference to the enclosed claims of the present patent.

The invention will be better understood by the following description, given by way of not-limitative example only, and with reference to the accompanying drawings in which :
- Fig. 1 shows a front view of a furniture wing provided with a handle, made with the manufacturing process according to the invention ;
- Fig. 2 shows a side view of the wing of Fig. 1, cutaway along the line A-A ;
- Fig. 3 shows a schematic side view of a component part of a furniture wing in a first and a second working steps subsequent to each other ;
- Fig. 4 shows a schematic side view of the furniture component part of Fig. 3 in a third and a fourth working steps subsequent to each other ;
- Figs. 5 and 6 show a schematic side view of the furniture component part of Fig. 3 in a fifth working step ;
- Fig. 7 shows a schematic front view of the furniture component part of Fig. 3 in a sixth, a seventh and a eighth working steps subsequent to each other ;
- Fig. 8 shows a schematic side view of the furniture component part of Fig. 3 in a ninth working step ;
- Fig. 9 shows a perspective side view of a furniture wing obtained with the process according to the invention ;
- Fig. 10 shows an enlarged perspective side view of the wing handle of Fig. 9.

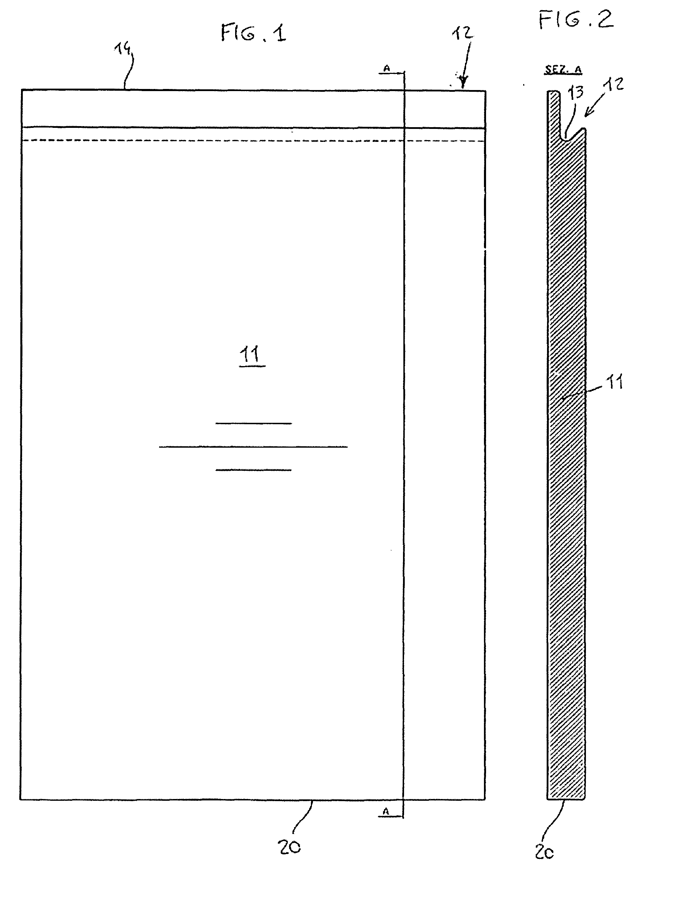

Figures 1, 2, 9 and 10 show a furniture wing 11 which is made with the manufacturing process according to the invention, adapted to manufacture wings and furniture component elements for furniture of any kind, such wing being able to be mounted on the front part of a furniture body (not shown), and may be displaced from an opened to a closed position, and vice versa, respectively to allow and prevent the access to one or more inner rooms of the same furniture.

As visible, the wing referred to is made with quadrangular shape with rectilinear sides and is provided with a catching handle 12 in the wing front side, which is provided by means of a curved notch 13 effected into such wing, in the present case in the wing upper rectilinear side 14, and for the entire width of such wing, however the handle may be obviously provided also into other wing positions, for example along either one of the rectilinear vertical sides thereof.

As usual, the furniture wing 11 is made with a central panel of wooden material, provided with the same outer profile and the same size of the same wing and the relative handle thereof, and with a surface covering applied on to the entire outer surface of the panel and the handle, which covering is formed by the decorative material of the required type and aesthetical appearance.

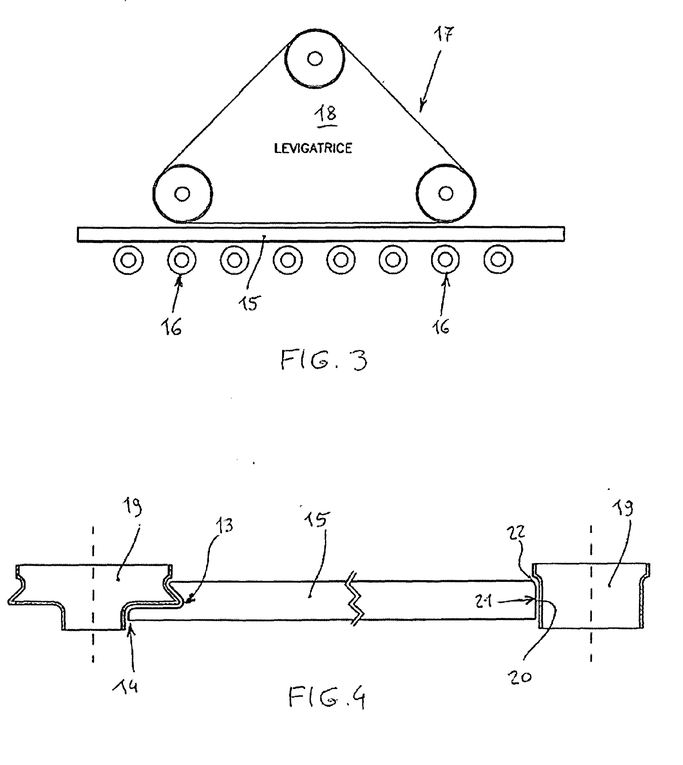

The furniture wing referred to is realized with the manufacturing process the steps of which are described hereinafter, with particular reference to the Figs. 3-8.

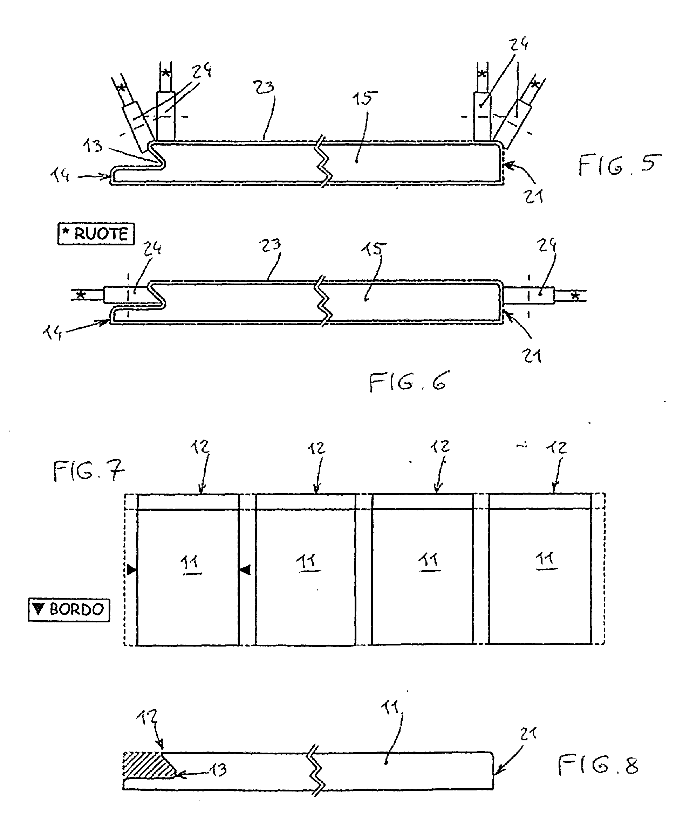

In the first step of the present process, visible from the Fig. 3, the panels of wooden materials (middle density panels, panels made with chips) to be employed to form the furniture wings, which are obtained with the known working techniques, are shaped as a set of rectilinear lengthened and continuous quadrangular bars, having such sizes as to allow to manufacture a plurality of wings. Then, each one of the lengthened and continuous bars is drawn and conveyed with conventional conveyor means (not shown) towards a cutting station of traditional type (not shown), where each bar is cut along its sides for obtaining the bar with a width identical to the height of a plurality of furniture wings, in the case in which the handle of each wing is situated on the upper part of the same wing. On the contrary, in the case in which the handle must be provided in either one of the vertical sides of the furniture wing, each bar is cut with a width identical to the width of each wing to be manufactured and a length identical to the height of a plurality of wings. In the second step of the present process, each cut lengthened bar 15 assigned to form a furniture wing is displaced from the cutting station and arranged on to a suitable conveyor means such as a roll conveyor 16, from which such bar 15 is displaced, with a single displacement direction, in correspondence of a smoothing station 17, formed by a smoothing machine 18 of traditional type, and on this position the bar is smoothed for all the length of its outer sides with greater size, until to obtain a smooth planar finishing of the same sizes. At the end of this operation, the smoothed bar is conveyed towards the subsequent treatment station, which will be described soon, for performing the third step of the present process. In the third step of the present process, visible from the Fig. 4, the bar side edges, corresponding to the upper and lower sides or the right and left side of a plurality of panels for wings, are adequately profiled for the entire extent thereof, and in particular the left side edge, corresponding to the upper side 14 of the various panels, is shaped with an appropriate profile tool 19 in a manner to form the curved notch 13 of the wing catching handle 12, while the right side edge, corresponding to either the lower side 20 or the right or left side of the various panels, is shaped in different manners, for example with a short rectilinear portion 21 and a curved edge 22 with small curvature radius, as shown in the Fig. 4. In the subsequent fourth step of the present process, the so profiled side edges are smoothed finished with a smoothing machine, in a manner to obtain a surface as smoother as possible. In the subsequent fifth step of the present process, visible from the Figs. 5 and 6, the bar 15 is displaced towards a subsequent coating station (not shown), and on to the whole external upper and lower surface of the bar 15 it is applied the flat outer covering 23 made of decorative material, and such covering is applied contemporaneously, in addition to the external/internal surface, also on to the side edges of the same bar.

The application of the covering is effected preferably by means of glueing, with the aid of a calender and conventional bending wheels or other bending tools 24 along the side edges of the bar 15 and terminates when all the covering has been applied correctly stretched and adherent along the entire peripheral surface of the same bar. In the subsequent sixth, seventh and eighth steps of the present process, visible in the Fig. 7, the so treated continuous bar 15 is displaced towards a further cutting station of traditional type (not shown), where it is cut to such extent as to obtain a set of wings, each one of them with the desired width, in the case in which the wing catching handle 12 is situated on the upper side of the same wing, as in the illustrated example. On the contrary, in the case in which the handle is provided in either one of the vertical sides of each wing, along the same side edges shown in the preceding Figures, the continuous bar 15 is cut at such an extent as to obtain a set of wings, each one of them having a width identical to the width of the bar and a height which is a submultiple of the length of the same bar. Then, the wing is squared in a parallel direction, so as to obtain the wing 11 with the desired final width.

Subsequently, in the case in which a possible flanging and trimming of the edge of the wing flat parts is required, this wing is displaced towards a flanging and trimming station of traditional type (not shown), where these workings operations are performed. Finally, in the last ninth step of the present process, visible in the Fig. 8, the trimming operation of the curved edge of the handle 12 of each wing is effected, by means of tools of traditional type. As long as a bar with a determinate length is machined, additional lengthened bars are arranged on to the assembly line, which bars are then machined in the same manner so as to obtain the required number of wings.

The manufacturing process according to the invention, therefore, permits to obtain furniture wings and furniture elements generally, in a simple manner and with less working steps and shorter working times with respect to these needed at the present time, with consequent higher flexibility and productive capacity and therefore better attainable economical benefits.

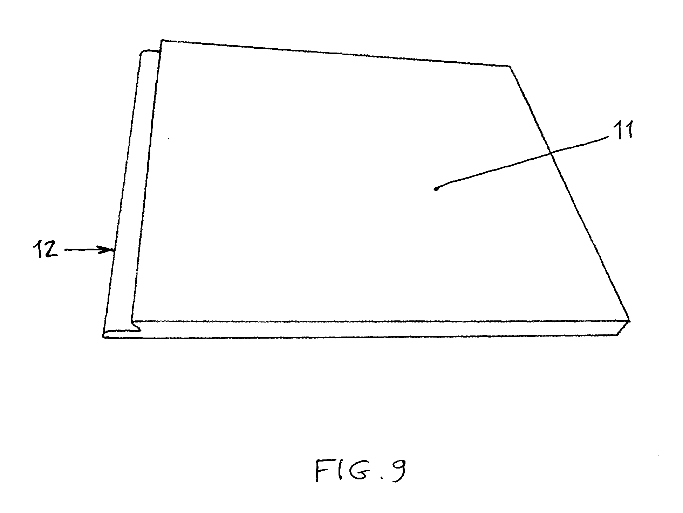

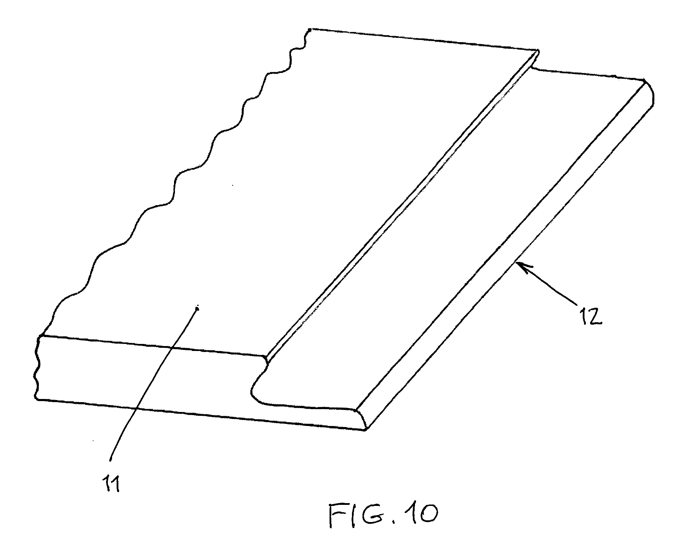

The invention also relates to a wing and a furniture element of this kind, which are obtained with the above described manufacturing process, and Figs. 9 and 10 show an example of such furniture wing 11 including a handle 12.

## Claims

1. Manufacturing process for shaped wings and similar furniture component elements, for furniture of various kind, wherein each wing (11) is mounted on to a furniture body and provided with a catching handle (12), so as to open or close the wing with respect to said furniture body, and wherein each wing (11) is made with a central panel of wooden material (ex. middle density panel), panel made with chips etc..) and a surface covering (23) applied on to the entire panel and handle external surface, and formed by decorative material of the required type and aesthetical appearance, **characterized by** the following manufacturing steps :
- a first step, in which the panels of wooden materials are shaped as a set of quadrangular rectilinear lengthened and continuous bars, having such sizes as to allow a plurality of furniture wings (11) and similar component elements to be manufactured, each lengthened bar being then drawn and conveyed with traditional conveyor means towards a cutting station, where each bar is cut along its sides for obtaining the bar with an established size ;
- a second step, in which said cut bar (15) intended to form a furniture wing (11) is displaced from said cutting station and arranged on to suitable conveyor means (ex. roll conveyor 16), from which such bar (15) is displaced, with a single displacement direction, in correspondence of a smoothing station (17), and in this position the bar (15) is smoothed for the entire length of its outer sides with greater size, until to obtain a smooth planar finishing of the same sides, and at the end of this operation said bar (15) is conveyed towards the subsequent treatment station ;
- a third step, in which in the subsequent treatment station the side edges of said bar (15) are adequately profiled for the entire extent thereof by profile means (19) ;
- a fourth step, in which the profiled side edges of said bar (15) are smoothed finished by smoothing means, so as to obtain a surface as smoother as possible ;
- a fifth step, in which said bar (15) is displaced towards a subsequent coating station, and on to all the external upper and lower surface of said bar (15) it is applied and glued said surface covering (23), which is applied and glued contemporaneously also on to the side edges of the same bar, wherein the application and glueing are performed by applicator means (ex. calender) and bending means (ex. wheels 24) along the side edges of said bar (15), and terminates when all said surface covering (23) has been applied correctly stretched and adherent along the entire peripheral surface of the same bar ;
- a sixth, seventh and eighth step, in which said continuous bar (15) is displaced towards a further cutting station of traditional type, where it is respectively cut to an extent able to obtain a set of wings (11), is squared for obtaining a wing, and in case is flanged and trimmed along the edge of the wing flat parts, by displacement of the same wing towards a further flanging and trimming station of traditional type ;
- a ninth step, in which the catching handle (12) of each wing (11) is trimmed by tools of traditional type.

2. Process according to claim 1, **characterized in that** in the case in which said handle (12) of each wing (11) be situated on the upper part of the same wing, said continuous bar (15) is cut, into said cutting station, along its edges for obtaining the bar with a width identical to the height of a plurality of furniture wings (11), and is also cut, into said further cutting station, with the desired width.

3. Process according to claim 1, **characterized in that** in the case in which said handle (12) be provided in either one of the vertical sides of said wing (11), each bar is cut, into said cutting station, with a width identical to the width of each wing to be manufactured and a length identical to the height of a plurality of wings (11), and is also cut, into said further cutting station, with a width identical to the width of the bar and a height which is a submultiple of the length of the same bar.

4. Furniture wing and furniture component element, **characterized in that** to be obtained with the manufacturing process according to the claims 1-3.
